(19) Europäisches Patentamt
European Patent Office
Office européen des brevets

(11) **EP 3 228 998 B1**

(12) **EUROPÄISCHE PATENTSCHRIFT**

(45) Veröffentlichungstag und Bekanntmachung des Hinweises auf die Patenterteilung:
**24.01.2024   Patentblatt 2024/04**

(21) Anmeldenummer: **17020111.5**

(22) Anmeldetag: **22.03.2017**

(51) Internationale Patentklassifikation (IPC):
**G01G 19/30** (2006.01)      **E01C 19/10** (2006.01)

(52) Gemeinsame Patentklassifikation (CPC):
**G01G 19/30; E01C 19/1004; E01C 19/1072**

(54) **QUASISTATISCHE DRUCKKOMPENSATION UND KORREKTUR DES WIEGEVERFAHRENS IN DISKONTINUIERLICH ARBEITENDEN ASPHALTMISCHANLAGEN**

QUASI-STATIC PRESSURE COMPENSATION AND CORRECTION OF THE WEIGHING METHOD IN DISCONTINUOUSLY WORKING ASPHALT MIXING PLANTS

COMPENSATION DE PRESSION QUASI STATIQUE ET CORRECTION DU PROCÉDÉ DE PESAGE DANS DES INSTALLATIONS DE MÉLANGE D'ASPHALTE À TRAITEMENT DISCONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2016   AT 1532016**

(43) Veröffentlichungstag der Anmeldung:
**11.10.2017   Patentblatt 2017/41**

(73) Patentinhaber: **Hoffer, Ronald Jürgen**
**7400 Oberwart (AT)**

(72) Erfinder: **Hoffer, Ronald Jürgen**
**7400 Oberwart (AT)**

(56) Entgegenhaltungen:
**EP-A2- 1 467 190      CH-A5- 658 724
US-A- 3 418 900**

**Beschreibung**

Die Erfindung betrifft eine quasistatische Druckkompensation und Korrektur des Wiegeverfahrens in diskontinuierlich arbeitenden Asphaltmischanlagen, insbesondere die Druckmessung mittels Drucktransmitter und ein damit verbundenes korrigiertes Wiegeverfahren während des Mischvorganges mit nicht getrockneten Recycling Material als Zuschlagsstoff.

Problemstellung

In diskontinuierlich arbeitenden Asphaltmischanlagen werden Zuschlagstoffe in einem Drehrohr getrocknet, gesiebt und somit in Korngrößen zwischen 0 mm und 32 mm getrennt für die weitere Verarbeitung gelagert. Entsprechend den qualitativen Anforderungen des Endproduktes werden die Zuschlagsstoffe gewichtsmäßig entsprechend der Asphaltmischrezeptur den Chargen beigemengt. Zur genauen Mischung der geforderten Asphaltmischgutzusammensetzung werden die einzelnen Bestandteile nach Korngrößen mittels Mineralwaage abgewogen und dem Rührwerk zusammen mit dem vorgewärmten Bitumen zugeführt.

Eine Asphaltmischanlage mit Wiegeeinheit ist beispielsweise durch die Patentschrift US3418900A offenbart.

Gesetzlichen Vorgaben entsprechend werden auch die vorgeschriebene Mengen an Recycling Material verarbeitet und dem Mischgut mit all den anderen Zuschlagsstoffen beigemengt. Das Recycling Material kann aufgrund der Beschaffenheit nicht zusammen mit den anderen Zuschlagstoffen im Drehrohr getrocknet werden. Das Recycling Material enthält somit entsprechend den Witterungsverhältnissen bis zu 7%(Masse) Wasser, welches mit den anderen noch heißen Zuschlagstoffen ins Rührwerk eingebracht und vermengt wird.

Die getrockneten Zuschlagstoffe weisen Temperaturen weit über der Siedetemperatur des Wassers unter atmosphärischen Bedingungen auf. Das enthaltene Wasser verdampft schlagartig, wodurch ein plötzlicher Druckanstieg im Rührwerk und unterhalb der Wiegeeinheit zu verzeichnen ist. Der Wiegevorgang wird infolge der Druckschwankungen beeinträchtigt, sodass der Wiegevorgang zwischenzeitlich unterbrochen werden muss, um die geforderte Asphaltmischgutgüte zu erreichen. Einerseits bewirkt die Dampfbildung im Mischgut eine höher Porendichte und damit bessere Verarbeitungseigenschaften.

Andererseits sind folgende Nachteile zu verzeichnen:

1. Die Wiegung der Zuschlagstoffe während dem Mischvorgang muss unterbrochen werden, sonst würde die Mischung von den qualitativen Vorgaben zuweit abweichen.

2. Der Wiegeprozeß wird unterbrochen bis der Druck im Rührwerk bzw. unterhalb der Wiegeeinheit sich wieder normalisiert hat, um eine Beeinflussung der Wiegung auszuschließen.

3. Wirtschatliche Einbußen aufgrund der Unterbrechung des Wiegeverfahrens und den daraus folgenden verringerten Durchsatz in Stoßzeiten.

4. Bei Erhöhung der Absaugleistung der Staubabsaugungen zum Zweck des rascheren Abbaues des entstandenen Überdrucks im Rührwerk werden die Fließgeschwindigkeiten im und über dem Rührwerk dermaßen erhöht, dass es zu einem Austrag der teuren staubförmigen Zuschlagstoffen kommt und die Qualitätsanforderungen des Alsphaltmischgutes nicht erreicht werden.

Allgemein müsste das Recycling Material in einem gesonderten weniger hoch temperierten Drehrohr getrocknet werden, um ein Ausdampfen im Rührwerk auszuschließen. Dies würde zusätzliche Investitionen und Wartungskosten sowie eventuell zusätzliche Brennstoffkosten, im Falle von zu geringen Abwärmemengen bzw. Abwärmetemperaturen für die Trocknung, bedeuten.

Die Erfindung betreffende Lösung:

Quasistatische Druckkompensation und Korrektur des Wiegeverfahrens

1. Der Bereich unterhalb und oberhalb der Wiegeinheit wird mit mehreren Druckmessstellen ausgestattet um dynamisch den Druckverlauf während eines Mischvorganges zu erfassen. Hierzu werden über den gesamten Umfang gleichmäßig Druckmessstellen verteilt, um einerseits Fehlmessungen zu vermeiden und andererseits um eine repräsentative Druckmessung im gesamten Reaktor zu erhalten. Die gemessenen Drücke jeweils über und unterhalb der Wiegeeinheit werden gemittelt. Die gemittelten Werte werden zur Korrektur des Wiegeverfahrens herangezogen.

2. Die gemessenen Werte $p_{(u,i)}$ und $p_{(o,i)}$ werden zu jedem Zeitpunkt in einen Korrekturwert $\overrightarrow{G_{(k)(t)}}$ für die Wiegeeinheit wie folgt umgewandelt.

$$\overrightarrow{G_{(k)(t)}} = k_{(A)} * \overrightarrow{\left( \sum_i p_{(u,i)(t)} - p_{(o,i)(t)} \right)} * \overrightarrow{e_{(z)}}$$

Der anlagenspezifische Korrekturwert $k_A$ ist individuell von Anlage zu Anlage verschieden und muss für jeden Anlagentyp gesondert eruiert werden. Der Anlagenkorrekturwert wird ebenso mit der unter 1. beschriebenen Messanordnung bestimmt.

3. Das Wiegeverfahren wird mit den korrigierten Wiegeparametern $\overrightarrow{G_{(eff)}}$ durchgeführt.

$$\overrightarrow{G_{(eff)}} = \overrightarrow{G_{(m)(t)}} + \overrightarrow{G_{(k)(t)}} = \overrightarrow{G_{(m)(t)}} + k_{(A)} * \overrightarrow{\left( \sum_i p_{(u,i)(t)} - p_{(o,i)(t)} \right)} * \overrightarrow{e_{(z)}}$$

So können auch bei Druckschwankungen die geforderten Mengen an Zuschlagstoffen ohne Unterbrechung für die Asphaltmischung genau dosiert zuführen werden, auch wenn es sich um geringe Mengen an staubförmigen Zuschlagstoffen handelt.

4. Das Recycling Material kann so teilgetrocknet oder auch vollkommen ungetrocknet in der jeweiligen Menge dem Asphaltmischgut, ohne Beeinträchtigung des Wiegeverfahrens und der Asphaltmischgutgüte, beigemengt werden.

5. Die Absaugleistung und Fließgeschwindigkeiten können konstant gehalten werden, sodass alle staubförmigen Zuschlagstoffe mit dem Asphaltmischgut gut vermengt und nicht in die Filter ausgetragen werden.

6. Die Druckverhältnisse im Rührwerk und in der Wiegeeinheit werden zu jedem Zeitpunkt erfasst um so sicherheitsrelevante Zustände der Anlage frühzeitig zu erkennen und gegebenenfalls können entsprechende Maßnahmen eingeleitet werden.

## Patentansprüche

1. Verfahren zur Herstellung einer Asphaltmischung bestehend aus Bitumen, getrockneten Zuschlagstoffen und ungetrocknetem Recycling Material,

   wobei die Zuschlagstoffe und das Recycling Material dem Bitumen beigemengt werden,
   wobei das gewichtsmäßige Verhältnis von Bitumen, Zuschlagstoffen und Recycling Material durch Wiegung der Zuschlagstoffe während des Mischvorganges bestimmt wird,
   wobei die jeweilige Masse $G_{(m)(t)}$ der einzelnen Zuschlagstoffe durch eine Mineralwaage bestimmt wird,
   wobei durch die plötzliche Verdampfung des im ungetrockneten oder teilgetrocknenten Recycling Material enthaltenen Wassers ein plötzlicher Druckanstieg entsteht
   **dadurch gekennzeichnet dass**,
   eine kontinuierliche Druckmessung des plötzlichen Druckanstieges unterhalb der Mineralwaage erfolgt und daraus ein Druckunterschied $p_{(u,i)(t)}$-$p_{(o,i)(t)}$ ermittelt wird,

   wobei der Druckunterschied zur Bestimmung eines Korrekturwertes $\overrightarrow{G_{(k)(t)}}$ für die Wiegung der Zuschlagstoffe bestimmt wird und daraus ein effektiver Wiegeparameter $\overrightarrow{G_{(eff)}}$ nach der Formel

$$\overrightarrow{G_{(eff)}} = \overrightarrow{G_{(m)(t)}} + \overrightarrow{G_{(k)(t)}} = \overrightarrow{G_{(m)(t)}} + k_{(A)} * \overrightarrow{\left( \sum_i p_{(u,i)(t)} - p_{(o,i)(t)} \right)} * \overrightarrow{e_{(z)}}$$

berechnet wird,

wobei die Wiegung der Zuschlagsstoffe während des Mischvorganges mit dem berechneten effektiven Wiegeparameter durchgeführt wird.

2. Verfahren nach Anspruch 1 **dadurch gekennzeichnet, dass** kontinuierlich Druckmessungen unterhalb $p_{(u,i)(t)}$ und oberhalb $p_{(o,i)(t)}$ der Mineralwaage zur Erfassung der Drücke insbesondere von Druckschwankungen während des Misch- und Wiegevorganges durchgeführt werden.

3. Verfahren nach einem der Ansprüche 1 oder 2 **dadurch gekennzeichnet, dass** mittels Druckmessung oberhalb und unterhalb der Mineralwaage kontinuierlich der dynamische Druckverlauf $p_{(u,i)(t)}$-$p_{(o,i)(t)}$ während dem gesamten Misch- und Wiegevorgang erfasst wird.

4. Verfahren nach einem der Ansprüche 1 oder 3 **dadurch gekennzeichnet, dass** ein Korrekturwert $\overrightarrow{G_{(k)(t)}}$ mittels der erfassten Differenzdrücke $p_{(u,i)(t)}$-$p_{(o,i)(t)}$ und unter Berücksichtigung eines anlagenspezifischen Korrekturwertes $k_{(A)}$ entsprechend der Formel $\overrightarrow{G_{(k)(t)}}=k_{(A)}*\left(\overline{\sum_i p_{(u,i)(t)}-p_{(o,i)(t)}}\right)*\overrightarrow{e_{(z)}}$ eruiert wird.

## Claims

1. A method of manufacturing an asphalt mixture consisting of bitumen, dried aggregates and undried recycled material,

   wherein the aggregates and recycled material are added to the bitumen,
   wherein the weight ratio of bitumen, aggregates and recycled material is determined by weighing the aggregates during the mixing process,
   wherein the respective mass $G_{(m)(t)}$ of the individual aggregates is determined by a mineral scale,
   wherein a sudden pressure increase is produced by the sudden evaporation of the water contained in the undried or partially dried recycling material **characterised in that**
   a continuous pressure measurement of the sudden pressure increase is carried out below the mineral scale and a pressure difference $p_{(u,i)(t)}$-$p_{(o,i)(t)}$ is determined therefrom,
   wherein the pressure difference is determined to determine a correction value $\overrightarrow{G_{(k)(t)}}$ for the weighing of the aggregates and an effective weighing parameter $\overrightarrow{G_{(eff)}}$ is calculated therefrom according to the formula

$$\overrightarrow{G_{(eff)}}=\overrightarrow{G_{(m)(t)}}+\overrightarrow{G_{(k)(t)}}=\overrightarrow{G_{(m)(t)}}+k_{(A)}*\left(\overline{\sum_i p_{(u,i)(t)}-p_{(o,i)(t)}}\right)*\overrightarrow{e_{(z)}}\ ,$$

   wherein the weighing of the aggregates during the mixing process is performed with the calculated effective weighing parameter.

2. Method according to claim 1, **characterised in that** continuous pressure measurements are carried out below $p_{(u,i)(t)}$ and above $p_{(o,i)(t)}$ of the mineral scale for recording the pressures, in particular pressure fluctuations during the mixing and weighing process.

3. Method according to one of claims 1 or 2, **characterised in that** with pressure measurement above and below the mineral scale, the dynamic pressure curve $p_{(u,i)(t)}$-$p_{(o,i)(t)}$ is continuously recorded during the entire mixing and weighing process.

4. Method according to one of claims 1 or 2 or 3, **characterised in that** a correction value $\overrightarrow{G_{(k)(t)}}$ is determined with the recorded differential pressures $p_{(u,i)(t)}$-$p_{(o,i)(t)}$ and taking into account a system-specific correction value $k_{(A)}$

$$\overrightarrow{G_{(k)(t)}}=k_{(A)}*\left(\overline{\sum_i p_{(u,i)(t)}-p_{(o,i)(t)}}\right)*\overrightarrow{e_{(z)}}$$

according to the formula .

**Revendications**

1. Procédé de fabrication d'un mélange bitumineux composé de bitume, de granulats séchés et de matériau recyclé non séché,

   dans lequel les granulats et le matériau recyclé sont ajoutés au bitume,
   dans lequel le rapport de poids entre le bitume, les granulats et le matériau recyclé est déterminé par pesage des granulats pendant le processus de mélange,
   dans lequel la masse respective $G_{(m)(t)}$ des granulats individuels est déterminée par une échelle minérale,
   dans lequel une augmentation de pression soudaine est produite par l'évaporation soudaine de l'eau contenue dans le matériau recyclé non séché ou partiellement séché,

   **caractérisé en ce que**

   une mesure continue de l'augmentation de pression soudaine est effectuée en dessous de l'échelle minérale et une différence de pression $p_{(u,i)(t)}$-$p_{(o,i)(t)}$ est déterminée à partir de celle-ci,
   dans lequel la différence de pression est déterminée pour établir une valeur de correction $\overrightarrow{G_{(k)(t)}}$ pour le pesage des agrégats et un paramètre de pesage effectif $\overrightarrow{G_{(eff)}}$ est calculé à partir de celle-ci selon la formule suivante

$$\overrightarrow{G_{(eff)}}=\overrightarrow{G_{(m)(t)}}+\overrightarrow{G_{(k)(t)}}=\overrightarrow{G_{(m)(t)}}+k_{(A)}*\left(\overline{\sum_i p_{(u,i)(t)}-p_{(o,i)(t)}}\right)*\overrightarrow{e_{(z)}} ,$$

   dans lequel le pesage des agrégats pendant le processus de mélange est effectué avec le paramètre de pesage effectif calculé.

2. Procédé selon la revendication 1, **caractérisé en ce que** des mesures de pression continues sont effectuées en dessous de $p_{(u,i)(t)}$ et au-dessus de $p_{(o,i)(t)}$ de l'échelle minérale pour l'enregistrement des pressions, en particulier des fluctuations de pression pendant le processus de mélange et de pesage.

3. Procédé selon l'une des revendications 1 ou 2, **caractérisé en ce que** la mesure de pression au-dessus et au-dessous de la balance minérale permet d'enregistrer en continu la courbe de pression dynamique $p_{(u,i)(t)}$-$p_{(o,i)(t)}$ pendant toute la durée du processus de mélange et de pesage.

4. Procédé selon l'une des revendications 1 ou 2 ou 3, **caractérisé en ce qu'**une valeur de correction $\overrightarrow{G_{(k)(t)}}$ est déterminée à l'aide des pressions différentielles enregistrées $p_{(u,i)(t)}$-$p_{(o,i)(t)}$ et en tenant compte d'une valeur de

$$\overrightarrow{G_{(k)(t)}}=k_{(A)}*\left(\overline{\sum_i p_{(u,i)(t)}-p_{(o,i)(t)}}\right)*\overrightarrow{e_{(z)}}$$

   correction spécifique au système $k_{(A)}$ selon la formule .

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3418900 A